# EUROPEAN PATENT APPLICATION

(11) **EP 3 753 874 A1**
(43) Date of publication of application: **23.12.2020**
(21) Application number: 19181410.2
(22) Date of filing: 20.06.2019
(51) Int. Cl.: B65G 47/08, B65G 47/244, B65G 47/26, B65G 47/31, B65G 57/24, B65G 47/29

(54) **POSITIONING STATION FOR POSITIONING A PLURALITY OF PACKS AND METHOD FOR POSITIONING A PLURALITY OF PACKS**

(71) Applicant: Sidel End of Line & Tunnels Solutions Srl, 43126 Parma (IT)
(72) Inventor: LANZI, Mauro, 43126 PARMA (IT)
(74) Representative: Sidel Group

(57) **Abstract**

There is described a positioning station (10, 10') for positioning packs (14, 15) according to a desired configuration, comprising a conveying unit (11), which is controllable to output pack (14) of packs (14, 15) at a given output first speed (v0); a first conveyor (5), which is drivable at a variable second speed (v5) and is arranged downstream of conveying unit (11) according to an advancing direction (X) of packs (14, 15) through positioning station (10, 10'); and a thrust element (13), which is adapted to thrust said pack (14), arranged on first conveyor (5), so as to render available pack (14) in desired configuration outside positioning station (10, 10'); positioning station (10, 10') comprises a second conveyor (4), which is controllable to decelerate pack (14) from output first speed (v0) to a third speed (v4); second conveyor (4) is interposed between conveying unit (11) and first conveyor (5) along advancing direction (X).

## Description

The present invention relates to a positioning station for positioning a plurality of packs and to a method for positioning a plurality of packs.

Bottling lines are known which comprise a plurality of units for carrying out respective operations on containers.

Very briefly, the known bottling lines comprise a rinsing unit for rinsing containers, a filling unit for filling containers with a pourable food product, a capping unit for capping containers, and a packaging unit for packaging together a given number of containers so as to form a plurality of packs of containers.

The bottling line further comprises a palletizing line, which is fed with packs of containers travelling along an advancing direction, typically horizontal.

In particular, the palletizing line substantially comprises a positioning station and a manipulation station, which are placed one after the other along the advancing direction of the packs of containers.

In detail, the positioning station is used for positioning the packs according to a desired configuration.

Furthermore, the manipulation station is used for gathering in layers the packs which have been sorted by the positioning station according to the desired configuration and for transferring these layers of packs on a structural base, known as pallet.

More precisely, this transfer operation of these layers on the pallet is typically performed by a manipulator device, e.g. a palletizing robot of the manipulation station, which stacks the layers on top of each other.

The pallet and the layers stacked on it form a loading unit, which is generally wrapped with a thermoplastic film and which can be conveniently transported.

In general, the desired configuration of the packs forming the layers is carefully designed for the purpose of optimizing the density (intended as the number of packs per surface unit) and compactness (which generally results in a better stability during the handling operations) of the loading unit.

In detail, positioning stations are known comprising:
- a plurality of conveying units, for example two, which output packs at a given output speed, along respective channels parallel to the advancing direction;
- a plurality of stepper conveyors, for example two, which are drivable at a variable speed and are fed with the packs supplied by the respective conveying unit according to the advancing direction; and
- a thrust element, which is controllable to thrust the packs from the stepper conveyors towards the manipulation station.

In general, each conveying unit of the positioning station comprises in turn a plurality of conveyors, which deal in a known manner with the counting and/or the rotation of the packs and are arranged in sequence along the advancing direction.

In other words, the conveyors of each conveying unit and the respective stepper conveyor define a respective channel of the positioning station.

Furthermore, the conveyors of each channel are drivable independently of the remaining conveyors of the other channels.

Similarly, each stepper conveyor is drivable independently of the remaining stepper conveyors of the other channels.

However the speed of the conveyors of each channel are linked to each other by constant ratios and the output speed of each conveying unit depends on the speeds of its respective conveyors.

The stepper conveyor is controllable to arrange the packs in the desired configuration, after the counting and/or the rotation thereof on the conveyors of the conveying unit.

The desired configuration is a particular arrangement of the packs, in which every pack has a desired relative distance with respect to the other packs.

In detail, the relative distances between the packs are modified by driving the stepper conveyors at variable speeds, ranging from zero to a maximum value.

In other words, by intermittently running or stopping one or more stepper conveyors, it is possible to modify the distance of a pack on a stepper conveyor from the packs still carried by the conveying units and from the packs carried by the remaining stepper conveyors.

In detail, the shorter the stopping distance that the pack needs to travel before its speed reaches zero, the more accurate is the positioning of the pack according to the desired configuration.

In theory, the positioning accuracy of a pack according to the desired configuration would be maximized if the pack were stopped within a null stopping distance.

As a consequence of the variations in the speed of the stepper conveyor, the packs carried by it undergo repeated accelerations and decelerations.

These accelerations and decelerations depend also on the output speed of each conveying unit, which in turn depends on the ratios between the speeds of its respective conveyors.

In other words, higher output speeds correspond to higher decelerations of the stepper conveyor.

Higher decelerations correspond to shorter stopping distances, and, therefore, to a greater positioning accuracy, but may cause the occurrence of vibrations, which may result in turn in a loss of stability of the packs.

At the same time, because of the ratios between the speeds of the conveyors of each conveying unit, higher decelerations correspond also to a higher rate of packs positioned according to the desired configuration in a given amount of time.

On the other hand, lower decelerations correspond to a less accurate positioning of the pack with respect to the other packs and to a low rate of packs positioned according to the desired configuration in a given amount of time.

However, lower decelerations are less likely to cause a loss of stability of the packs.

A need is therefore felt within the industry to accurately position the packs according to a desired configuration, while limiting the accelerations and the decelerations on the positioning station and without affecting the rate of packs positioned according to the desired configuration in a given amount of time.

It is an object of the present invention to provide a positioning station, allowing to meet the aforementioned need in a simple and cost-effective manner.

This object is achieved by a positioning station, as claimed in claim 1.

The invention also relates to a method for positioning packs, as claimed in claim 9.

Two preferred, non-limiting embodiments of the present invention will be described by way of example with reference to the accompanying drawings, in which:
- Figures 1 to 10 are perspective views of a positioning station according to a first embodiment of the present invention in respective sequential operative steps;
- Figure 11 is a schematic diagram of the speeds of the conveyors of the positioning station of Figures 1 to 10;
- Figure 12 is a perspective view of a positioning station according to a second embodiment of the present invention; and
- Figure 13 is a schematic diagram of the speeds of the conveyors of the positioning station of Figure 12.

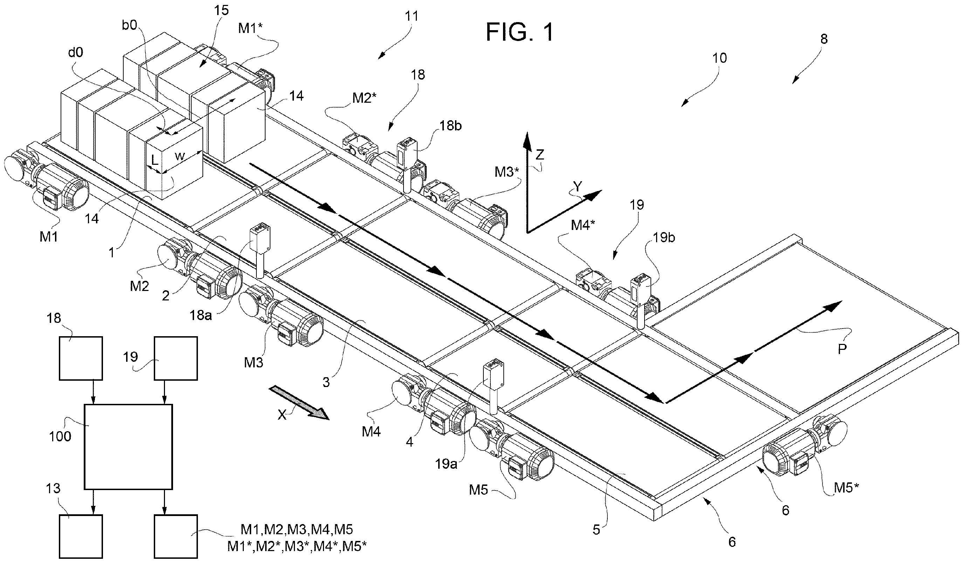

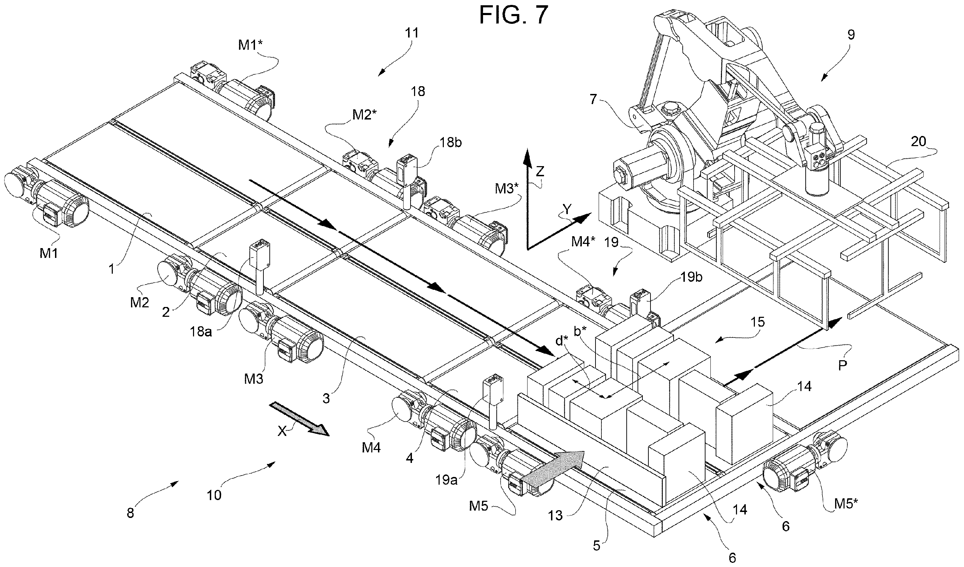

With reference to Figures 1 to 10, numeral 10 indicates a positioning station for positioning a plurality of packs 12 according to a desired configuration.

Positioning station 10 is incorporated in a palletizing line 8 of a bottling line (not shown) for bottling a plurality of containers for pourable products, preferably food products.

Bottling line substantially comprises a rinsing unit for rinsing containers, a filling unit for filling containers, a capping unit for capping containers, a packaging unit for packaging together a given number of containers, so as to form a plurality of packs 14, 15 of containers and palletizing line 8.

Palletizing line 8 is adapted to form a plurality of stacked layers 16, formed each with a plurality of packs 14, 15.

Alternatively, positioning station 10 could be used for positioning any kind of object or industrial products.

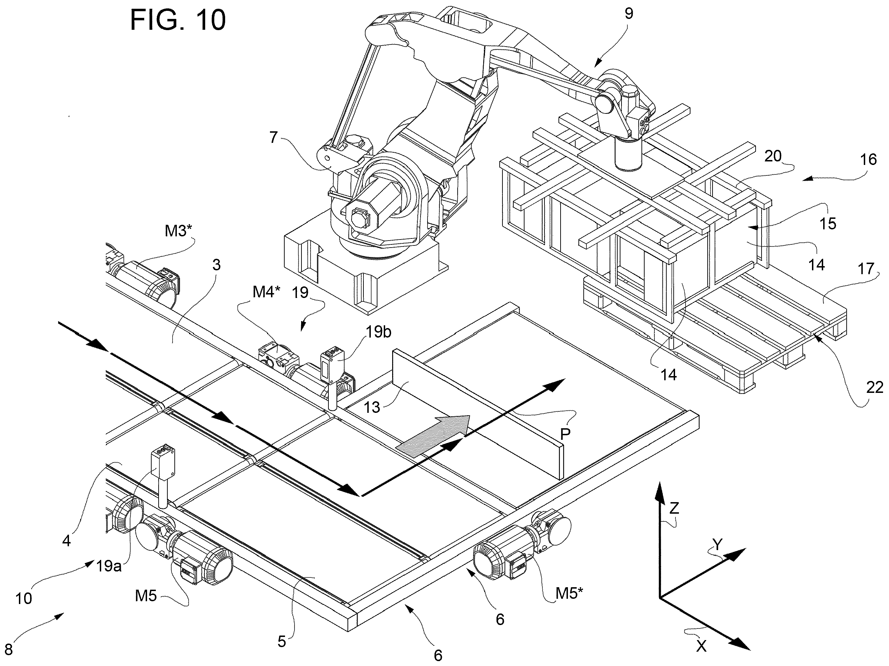

Furthermore, palletizing line 8 substantially comprises:
- positioning station 10; and
- a manipulation station 9, adapted to form layers 16 of packs 14, 15 sorted, in use, by positioning station 10 and to stack said layers 16 of packs 14, 15 on a pallet 17, so as to form a loading unit 22 (Figure 10).

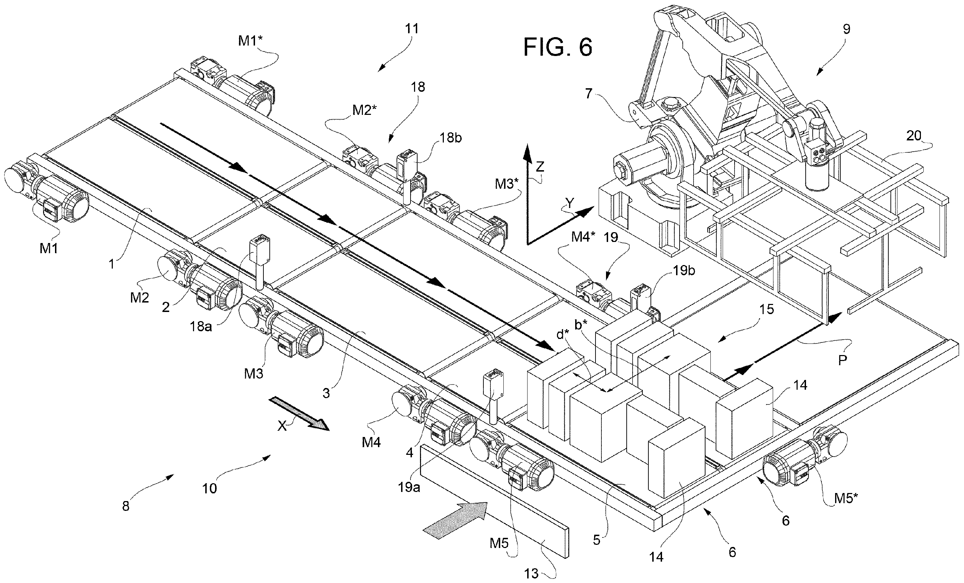

As shown in Figures 6 to 10, manipulation station 9 is positioned downstream of positioning station 10 according to an advancing path P of packs 14, 15 through palletizing line 8.

In the embodiment shown, manipulation station 9 comprises a robot arm 7.

In detail, robot arm 7 is equipped with a prehensile tool 20, which is capable of grouping together packs 14, 15 sorted by positioning station 10 to form layers 16 and of transferring layers 16 on pallet 17.

In the present description, the term "pallet" refers to a structural base, on which goods can be stacked so that they can be conveniently lifted or moved.

Path P comprises a first stretch along an advancing direction X and a second stretch along an advancing direction Y, perpendicular to direction X.

Packs 14, 15 advance parallel to direction X through positioning station 10 and parallel to direction Y through manipulation station 9.

Furthermore, according to direction X, packs 14 are arranged in a forwardmost position with respect to remaining packs 15.

Positioning station 10 substantially comprises (Figures 1 to 9) :
- a plurality of conveying units 11, which output pack 14 of the plurality of packs 14, 15 at an output speed v0;
- a plurality of conveyors 5, which are drivable at a variable speed v5 and are arranged downstream of conveying units 11, according to direction X; and
- a thrust element 13 (shown in Figures 6 to 10), for thrusting packs 14, 15 on conveyor 5 towards manipulation station 9.

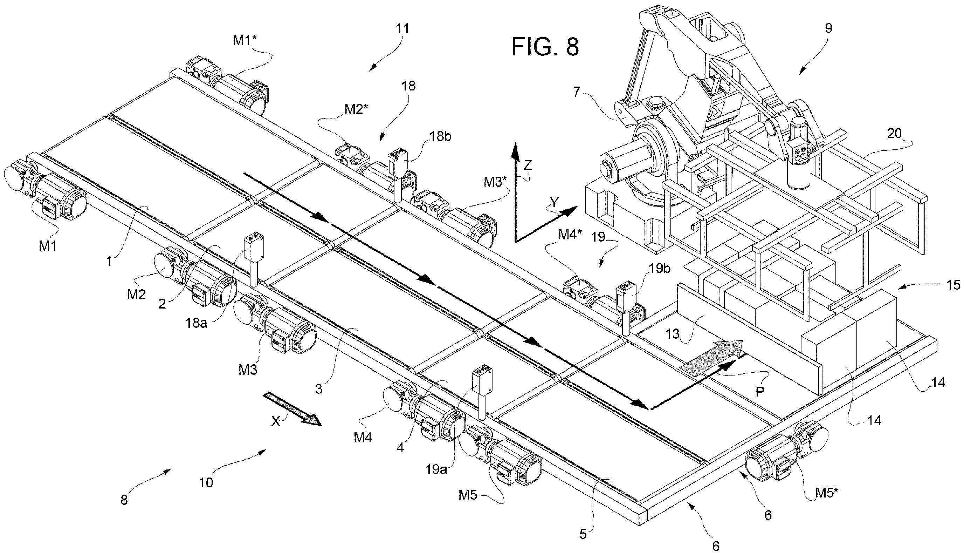

In the embodiment shown, thrust element 13 reciprocates along direction Y, which is perpendicular to direction X, between an initial position (Figure 6), in which it is spaced apart from packs 14, 15 and a final position, in which it contacts and has terminated to thrust packs 14, 15 (Figure 8).

More precisely, in the embodiment shown, positioning station 10 comprises two conveying units 11 and two conveyors 5.

In detail, the two conveying units 11 are arranged alongside each other in direction Y and parallel to direction X and are driven by respective electric motors M1, M2, M3; M1*, M2*, M3*. As a consequence, the two conveying units 11 are drivable independently of each other.

Similarly, the two conveyors 5 are arranged alongside each other in direction Y and parallel to direction X and are driven by an electric motor each M5, M5*. As a consequence, the two conveyors 5 are drivable independently of each other.

Furthermore, conveying units 11 and respective conveyors 5 define two respective channels 6 of positioning station 10.

In the following, the present description will refer to a single conveying unit 11, a single conveyor 5 and to a single channel 6, for the sake of simplicity, being conveying units 11, conveyors 5 and channels 6 identical to one another.

Each pack 14, 15 has a length L, measured along direction X and a width w, measured along direction Y (Figure 1).

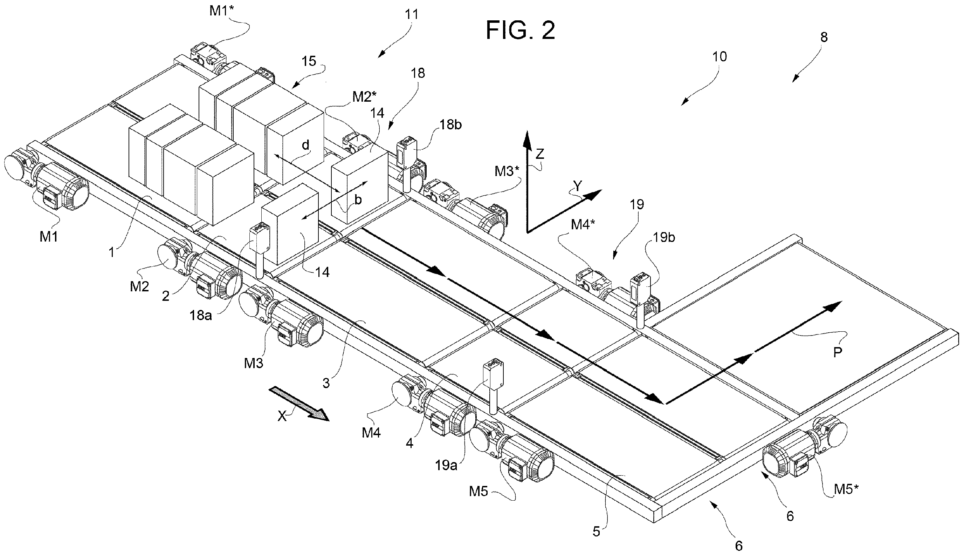

Furthermore, for each pack 14, 15 it is possible to define a plurality of distances d along direction X and a plurality of distances b along direction Y with respect to other packs 14, 15 (Figure 2).

Distances d, b indicate in the present description the distance between homologous points of packs 14, 15, e.g. the barycentre thereof.

When packs 14, 15 are advanced on conveyor 1, each pack 14, 15 is at an initial value d0 of distances d and at an initial value b0 of distances b with respect to other packs 14, 15 (Figure 1).

The desired configuration is a particular arrangement of the plurality of packs 14, 15 in which each pack 14, 15 is at a desired value d* of distances d and at a desired value b* of distances b with respect to other packs 14, 15 (Figure 6).

In detail, conveying unit 11 comprises, as shown in Figures 1 to 9 and 11:
- a conveyor 1, which is drivable at a variable speed v1, ranging between a minimum value v1min and a maximum value v1max, which is lower than output speed v0;
- a conveyor 2, which is drivable at a variable speed v2, ranging between a minimum value v2min and a maximum value v2max, which is greater than v1max; and
- a conveyor 3, which is drivable at a variable speed v3, ranging between a minimum value v3min and a maximum value v3max, which is greater than v2max and is equal to output speed v0.

In the embodiment shown, values v1min, v2min, v3min are equal to zero.

Furthermore, speeds v1, v2, v3 are equal to their respective values v1min, v2min, v3min when thrust element 13 moves from initial position to final position along direction Y.

Conveyors 1, 2 and 3 are positioned one after the other and upstream of conveyor 5, with reference to advancing direction X.

Conveyor 3 is used to rotate packs 14, 15 with known and not shown rotating means about an axis Z, which is transversal to advancing direction X and to direction Y.

Conveyors 1, 2, 3 are driven by respective electric motors M1, M2, M3, (M1*, M2*, M3*).

In the embodiment shown, conveyors 1, 2, 3 and 5 are conveyor belts.

Positioning station 10 further comprises a photoelectric cell 18 (Figures 1 to 9), which is installed between conveyor 1 and conveyor 2 and is used in a known manner for counting packs 14, 15 which are driven towards conveyor 5.

In detail, an infrared beam is emitted from an emitter 18a of photoelectric cell 18 and is received by a receiver 18b of photoelectric cell 18.

Emitter 18a and receiver 18b are arranged parallel to axis Y on opposite respective sides of conveyors 2.

When a pack 14, 15 is interposed between emitter 18a and receiver 18b along direction Y, the infrared beam is interrupted and the presence of packs 14, 15 is therefore detected by photoelectric cell 18 (as shown in Figures 2, 3 and 5).

Photoelectric cell 18 is capable of detecting and counting the at least one forwardmost pack 14 as it is driven and spaced out from remaining packs 15 along direction X, because the infrared beam is intermittently interrupted.

Advantageously, positioning station 10 comprises a plurality of conveyors 4, two in the embodiment shown, interposed each between a respective conveying unit 11 and a respective conveyor 5 along advancing direction X and controllable to decelerate packs 14, 15 from output speed v0 to a speed v4.

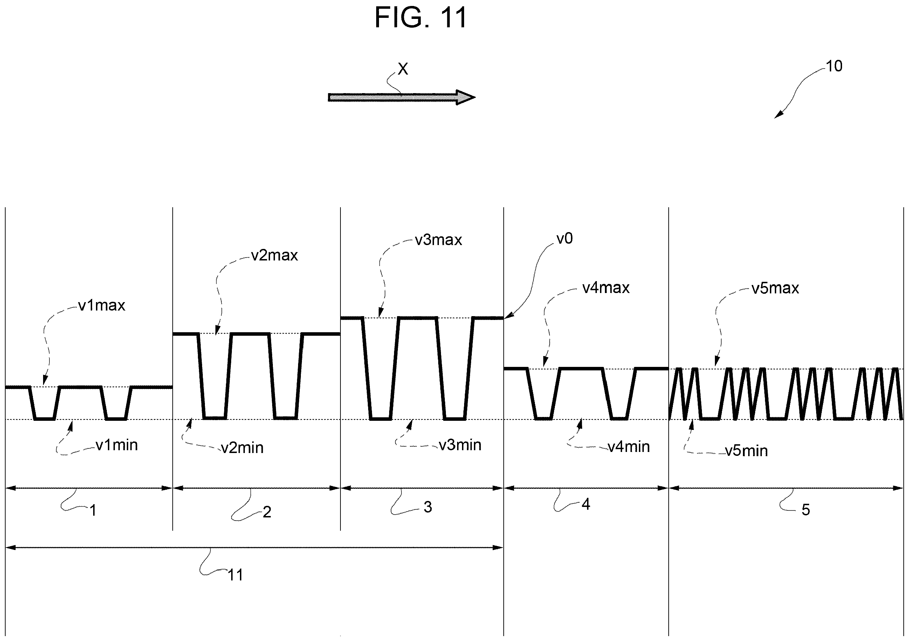

In detail, speed v4 is variable and ranges between a minimum value v4min and a maximum value v4max, which is lower than speed v0 (Figure 11).

In the embodiment shown, value v4min is equal to zero.

Furthermore, speed v4 is equal to value v4min when thrust element 13 moves from initial position to final position along direction Y.

Conveyors 4 are driven by respective electric motors M4, M4*, therefore they are drivable independently of each other.

Conveyors 4 are arranged alongside each other in direction Y and parallel to direction X.

Furthermore, each conveyor 4 is part of a respective channel 6 of positioning station 10 together with a respective conveying unit 11 and a respective conveyor 5.

The following of the present description will still refer to a single conveyor 4, to respective conveying unit 11, to respective conveyor 5 and to respective channel 6, for the sake of simplicity.

Furthermore, in the embodiment shown, conveyor 4 is a conveyor belt.

In the embodiment shown, the ratio of v2max to v1max is approximately equal to 2.5; the ratio of v3max to v2max is approximately equal to 1.2 and the ratio of v3max to v4max is approximately equal to 0.5.

Positioning station 10 further comprises a photoelectric cell 19, which is installed between conveyor 4 and conveyor 5.

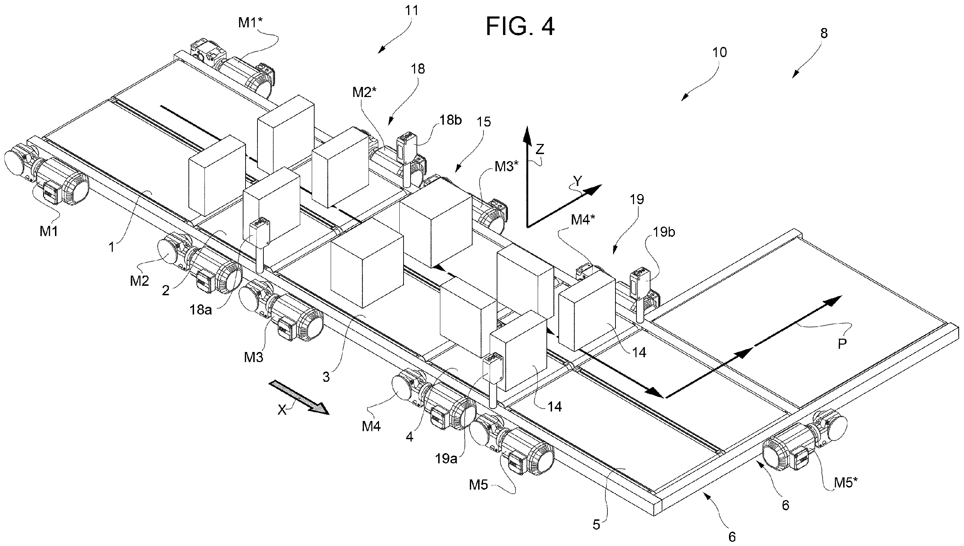

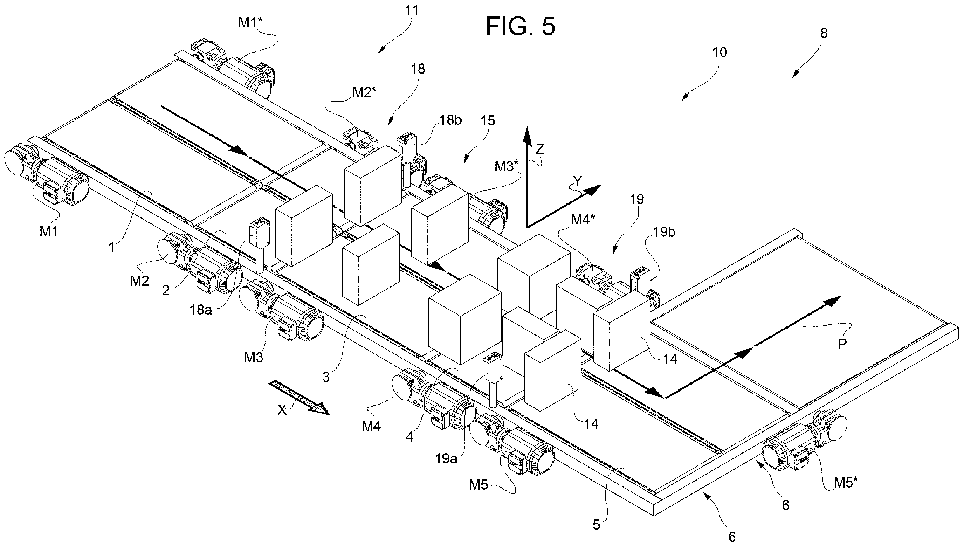

Photoelectric cell 19 is used for signalling the presence of at least one pack 14 on conveyor 4 (Figures 4 and 5).

Photoelectric cell 19 comprises an emitter 19a and a receiver 19b, arranged parallel to direction Y and on opposite respective sides of conveyors 4.

Positioning station 10 further comprises a control unit 100 (only schematically shown in Figure 1).

Control unit 100 receives as input command at least the signals emitted by photoelectric cells 18, 19 and generates, on the basis of these signals, control signals for motors M1, M2, M3, M4, M5, (M1*, M2*, M3*, M4*, M5*) and for thrust element 13.

In detail, control unit 100 controls thrust element 13 to move between initial position and final position.

Furthermore, control unit 100 controls motors M1, M2, M3, M4, (M1*, M2*, M3*, M4*) to drive respectively conveyors 1, 2, 3, 4 at their respective maximum values of speed v1max, v2max, v3max, v4max when thrust element 13 is in initial position.

In addition, control unit 100 controls motors M1, M2, M3, M4, (M1*, M2*, M3*, M4*) to decelerate respective conveyors 1, 2, 3, 4 to their respective minimum values of speed v1min, v2min, v3min, v4min when thrust element 13 moves from initial position towards final position and to accelerate the respective conveyors 1, 2, 3, 4 to their respective maximum values of speed v1max, v2max, v3max, v4max when thrust element 13 moves from final position towards initial position.

Moreover, control unit 100 controls motors M4, M5, (M4*, M5*), so as to position packs 14, 15 on conveying unit 5 according to the desired configuration.

In detail, conveyor 5 is drivable intermittently at speed v5, which ranges from a minimum value v5min to a maximum value v5max.

In the embodiment shown, value v5min is equal to zero and value v5max is equal to value v4max.

Conveyor 5 is preferably driven at value v5min of speed v5 when no packs 14, 15 are detected on conveyor 4 by photoelectric cell 19.

Furthermore, conveyor 5 is accelerated by motor M5, (M5*) to value v5max of speed v5 as a consequence of the input signal that control unit 100 receives by photoelectric cell 19 when packs 14, 15 are detected on conveyor 4.

Since in the embodiment shown value v5max is equal to value v4max, packs 14, 15 are not substantially accelerated or decelerated when they are transferred from conveyor 4 to conveyor 5.

In detail, it is possible to define a deceleration a1, as the deceleration which is necessary to reduce the speed of pack 14 from speed v4 to value v5min of speed v5 within stopping distance s, i.e. the distance that pack 14 runs, in use, on conveyor 5 before than its speed reaches zero.

In general, it is desirable that stopping distance s is not greater than length L of pack 14.

When packs 14, 15 are outputted from conveyor 4 to conveyor 5, motors M5, M5* may be commanded by control unit 100 to keep driving conveying unit 5 at value v5max, or to decelerate to value v5min of speed v5 with deceleration a1, in order to position forwardmost pack 14 at distances d*, b* with respect to remaining packs 15, according to the desired configuration.

The operation of positioning station 10 is hereinafter described at first with reference to a single channel 6, formed only by a respective conveying unit 11, the respective conveyor 4 and the respective conveyor 5.

The operation of positioning station 10 is furthermore described with reference to a condition, in which the forwardmost packs 14 are one for each channel 16.

Packs 14, 15 are carried by conveyor 1 at speed v1 equal to value v1max along advancing direction X, as shown in Figures 1 and 11.

In detail, packs 14, 15 are moved towards conveyor 2, which runs at speed v2 equal to value v2max, which is greater than v1max.

In this situation, distances d of each pack 14, 15 from other packs 14, 15 are equal to initial value d0.

When packs 14, 15 come into contact with conveyor 2, the forwardmost pack 14 accelerates from speed v1 to speed v2.

As a consequence of this acceleration, pack 14 is spaced out along advancing direction X from remaining packs 15 (as shown in Figure 2), which still move at speed v1 equal to value v1max on conveyor 1.

In other words, at this stage, distances d different than initial value d0 and greater than zero can be measured between pack 14 and remaining packs 15 along direction X.

Pack 14 is then carried by conveyor 2 at speed v2 equal to value v2max along advancing direction X.

When pack 14 is advanced between emitter 18a and receiver 18b of photoelectric cell 18 along direction Y, the infrared beam is interrupted and the passage of pack 14 is detected (Figure 2).

In further detail, since pack 14 is spaced out from remaining packs 15 by distances d greater than zero, it is ensured that only one pack 14 is counted at a time.

In fact, as conveyor 2 continues to run along direction X, pack 14 is not anymore placed between emitter 18a and receiver 18b and the infrared beam is not anymore interrupted.

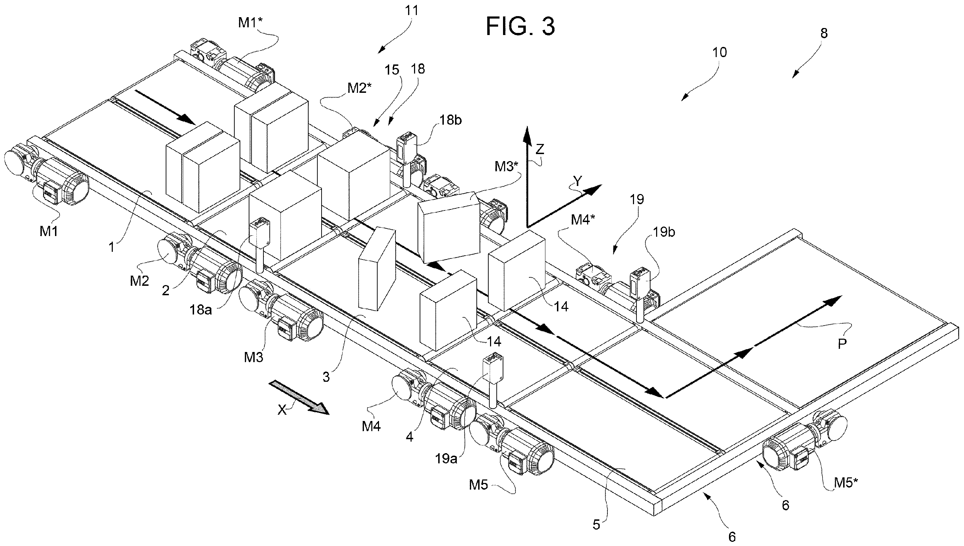

Pack 14 is then outputted to conveyor 3, which runs at speed v3 equal to v3max and which rotates pack 14 about axis Z with known and not shown rotating means (Figure 3).

In detail, when pack 14 is rotated on conveyor 3, the length L of pack 14 along advancing direction X is modified.

In further detail, when pack 14 is rotated by 90° about axis Z, the length L of the rotated pack 14 along direction X after its rotation is equal to the width w the same pack had before its rotation.

Furthermore, since pack 14 is accelerated from values of speed v2max to v3max, it is further spaced out along direction X from remaining packs 15, which still advance on conveyors 1 and/or 2.

In detail, if distances d of pack 14 on conveyor 3 from remaining packs 15 are greater than length L and/or width w of pack 14, pack 14 can be rotated on conveyor 3 without interfering with remaining packs 15.

In other words, thanks to the further acceleration which pack 14 is subjected to when it advances from conveyor 2 to conveyor 3 and to the consequent increase of distances d from remaining packs 15, pack 14 may gain more room for rotating on conveyor 3.

When pack 14 is outputted on conveyor 4, which runs at speed v4 equal to value v4max, it is decelerated from output speed v0 to speed v4 (Figured 4 and 11).

Pack 14 is then carried by conveyor 4 and photoelectric cell 19 detects its presence (Figure 4), while conveyor 5 runs at speed v5 equal to value v5min, which in the embodiment shown is equal to zero.

Photoelectric cell 19 sends thus a signal to control unit 100, which in turn commands motor M5, (M5*) of conveyor 5 to accelerate conveyor 5 from value v5min of speed v5 to value v5max.

Pack 14 is thus outputted from conveyor 4 at speed v4 equal to v4max to conveyor 5, which runs at value v5max of speed v5, while remaining packs 15 are still advancing on conveying unit 11 and/or on conveyor 4 (Figure 5).

In the embodiment shown, value v5max is equal to speed v4, therefore pack 14 is not substantially accelerated or decelerated when it is transferred from conveyor 4 to conveyor 5.

After coming into contact with pack 14, conveyor 5 may run continuously at speed v5 equal to value v5max or may decelerate with deceleration a1 from value v5max to value v5min of speed v5, so as to stop pack 14 within a stopping distance s equal preferably to length L of pack 14.

As the presence of remaining packs 15 on conveyor 4 is recorded by photoelectric cell 19, conveyor 5 is again accelerated by motor M5, (M5*) from value v5min of speed v5 to value v5max.

Each of remaining packs 15 is then outputted from conveyor 4 at speed v4 equal to v4max to conveyor 5, which runs at value v5max.

After coming into contact with each of remaining packs 15, conveyor 5 is again decelerated with deceleration a1 from value v5max to value v5min of speed v5, so as to stop each of remaining packs 15 within a stopping distance s equal preferably to the respective length L of each of remaining packs 15.

Pack 14 is therefore repeatedly accelerated to value v5max and decelerated to value v5min, while advancing along conveyor 5, as remaining packs 15 come into contact with conveyor 5 and advance in turn along conveyor 5.

As a result of the repeated accelerations and decelerations of conveyor 5, distances d of each pack 14, 15 with respect to other packs 14, 15 along direction X are modified according to the desired configuration and reach the desired value d*.

Furthermore, as a result of the repeated accelerations and decelerations of one conveyor 5 with respect to the other conveyor 5, distances b of each pack 14, 15 with respect to other packs 14, 15 along direction Y are also modified according to the desired configuration and reach the desired value b*.

At this stage, the desired configuration is obtained at conveyor 5 (Figure 6).

Once packs 14, 15 have been positioned according to the desired configuration at conveyor 5, thrust element 13 moves parallel to axis Y from initial position towards final position and thrusts sorted packs 14, 15 from conveyor 5 towards manipulation station 9 (Figures 6 to 8).

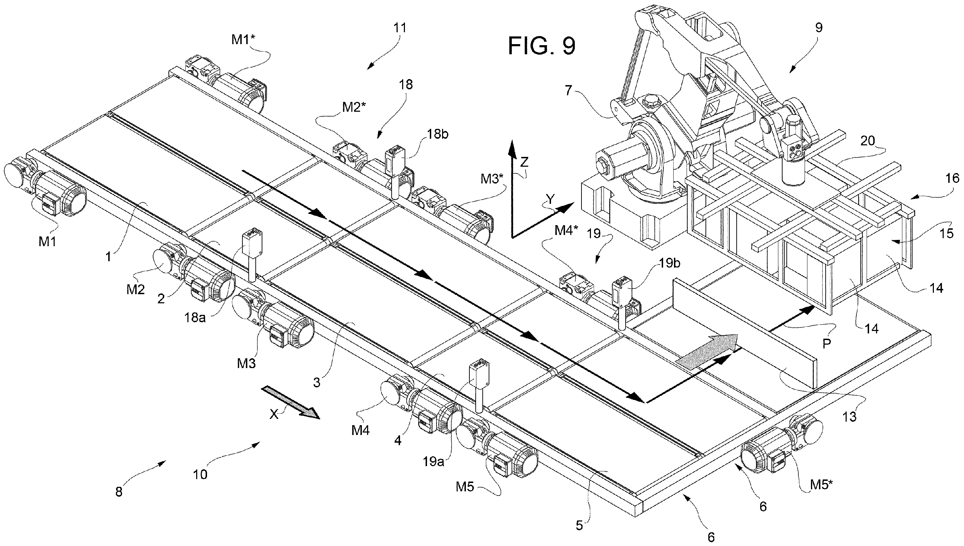

At this point, robot arm 7 grips sorted packs 14, 15 with its prehensile tool 20, grouping them (Figure 9).

The grouped and sorted packs 14, 15 are then transferred towards pallet 17, forming a layer 16 of loading unit 22 (Figure 10) and thrust element 13 may move back to its initial position.

In detail, during the thrusting operation of the plurality of packs 14, 15, conveying unit 11 and conveyor 4 are normally stopped (Figure 8).

In other words, no more packs are outputted from conveyor 4 to conveyor 5, until the sorted packs 14, 15 on conveyor 5 are thrusted to manipulation station 9.

Once the plurality of packs 14, 15 has been thrusted to manipulation station 9 and preferably thrust element 13 has come back to its initial position, conveying unit 11 and conveyor 4 resume running at their respective running speeds.

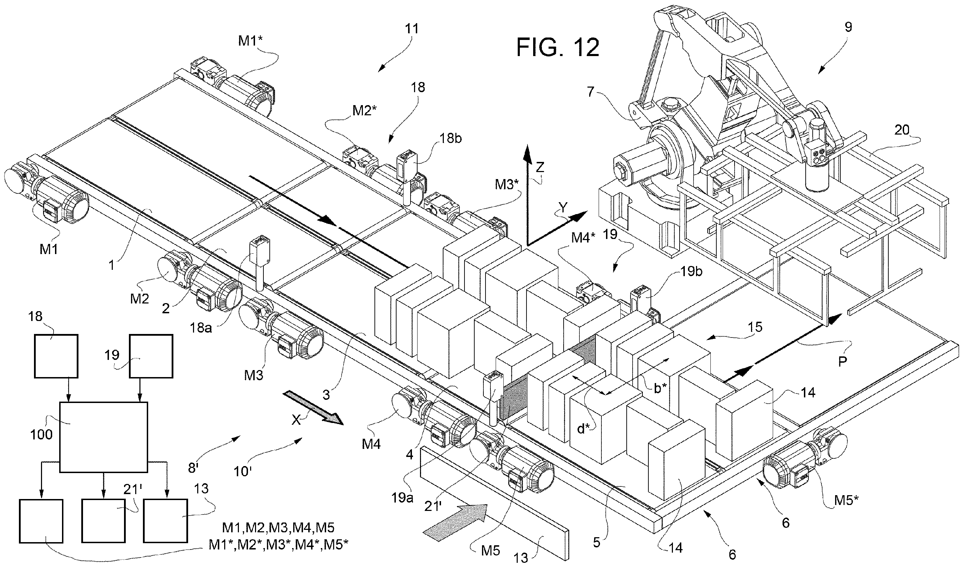

With reference to Figure 12, numeral 10' indicates a positioning station for positioning packs 14, 15 in accordance with a desired configuration, according to a second embodiment of the invention.

Positioning station 10' is similar to positioning station 10 and will be described hereinafter only as far as it differs therefrom; corresponding or equivalent parts of positioning stations 10, 10' will be indicated where possible by the same reference numerals.

In particular, positioning station 10' differs from positioning station 10 for comprising a stopper 21', which is movable between:
- a retracted position, in which it allows the advancement of packs 14, 15 along positioning station 10'; and
- a blocking position, in which it blocks the advancement of packs 14, 15 travelling on conveyor 4 towards conveyor 5.

In other words, when stopper 21' is in blocking position, it acts as a physical barrier and prevents further packs 14, 15 coming from conveyor 4 from interfering with packs 14, 15 sorted on conveyor 5 according to the desired configuration and with thrust element 13.

In the embodiment shown, stopper 21' moves between retracted position and blocking position along axis Z.

In detail, stopper 21' is commanded to move from retracted position to blocking position by control unit 100, as a consequence of the movement of thrust element 13 from initial position towards final position.

Accordingly, stopper 21' is commanded to move back from blocking position to retracted position by control unit 100, as a consequence of the movement of thrust element 13 from final position towards initial position.

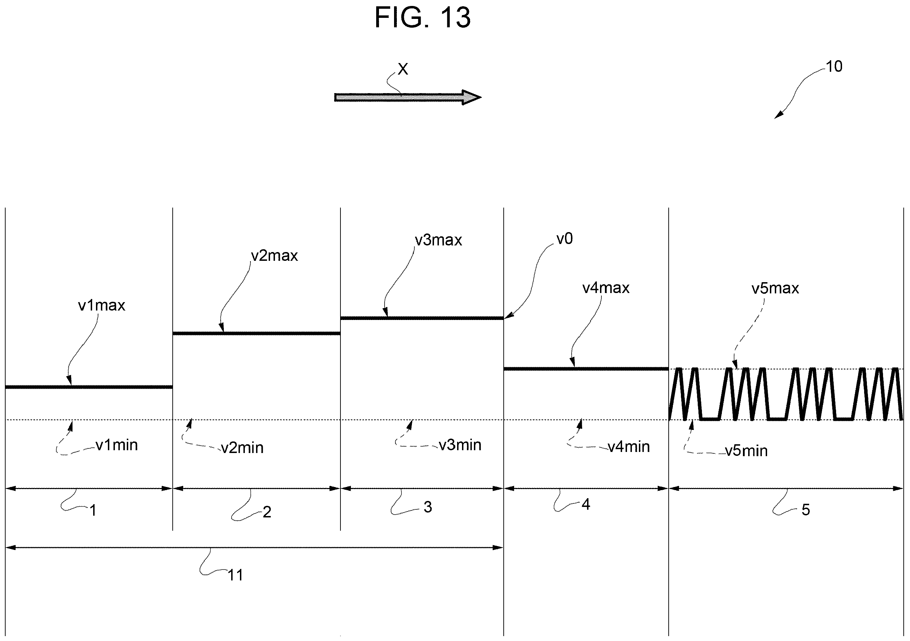

According to the second embodiment of the present invention, conveyors 1, 2, 3, 4 are driven continuously at respective speeds v1, v2, v3, v4, preferably equal to respective maximum values v1max, v2max, v3max, v4max (as shown in Figure 13).

The operation of positioning station 10' is similar to that of positioning station 10 and is described only insofar as it differs therefrom.

In particular, the operation of positioning station 10' differs from that of positioning station 10 in that when thrust element 13 starts moving from initial position towards final position, control unit 100 commands stopper 21' to move from retracted position towards blocking position.

When stopper 21' is in blocking position, further packs 14, 15 coming from conveying unit 11 amass upstream of stopper 21' according to advancing direction X and are prevented from reaching conveyor 5 while thrust element 13 is thrusting packs 14, 15 towards manipulation station 9.

Furthermore, while thrust element 13 thrusts packs 14, 15, control unit 100 commands conveying unit 11 and conveyor 4 to keep running at their respective working speeds v1, v2, v3, v4 greater than zero.

The advantages of positioning station 10, 10' and of the method according to the present invention will be clear from the above description.

In particular, in known positioning stations not comprising conveyor 4, the speed of packs immediately prior to be outputted to conveyor 5 is equal to speed v0.

As mentioned above, the desired configuration of packs 14, 15 is typically obtained by repeatedly stopping and running conveyor 5, so as to modify distances d, b of each pack 14, 15 with respect to other packs 14, 15 into to desired values d*, b*.

In the known solution discussed in the introductory part of the present description, the speed of pack 14 is reduced to zero within stopping distance s with a deceleration a2 when it is advancing on conveyor 5.

Since conveyor 4 is interposed between conveying unit 11 and conveyor 5, it is possible to reduce the speed of packs 14, 15 from speed v0 to speed v4, before they come into contact with conveyor 5.

Therefore, being value v4max lower than speed v0, pack 14 can be stopped on conveyor 5 within the same stopping distance s with deceleration a1, which is lower than deceleration a2.

As a consequence, it is possible to accurately position packs 14, 15 according to the desired configuration on conveyor 5, while limiting the accelerations and decelerations of conveyor 5 and without affecting the rate of packs 14, 15 positioned according to the desired configuration in a given amount of time.

In fact, since conveyor 4 is interposed between conveying unit 11 and conveyor 5, the deceleration a1 is not anymore dependent on speed v0 and on speeds v1, v2, v3.

Furthermore, since deceleration a1 is lower than deceleration a2, packs 14, 15 can be moved along conveyor 5 with a greater stability.

Furthermore, positioning station 10' is advantageous for limiting the time that packs 14, 15 spend going through positioning station 10'.

In fact, according to the second embodiment of the present invention, conveying unit 11 and conveyor 4 need not to be stopped while thrust element 13 moves between its initial and final positions.

Since further packs 14, 15 keep advancing upstream of stopper 21' while the latter is in blocking position, the interval of time in which conveying unit 11 and conveyor 4 are inoperative is minimized and the overall time that packs 14, 15 spend going through positioning station 10' is thus reduced.

Finally, it is apparent that modifications and variants not departing from the scope of protection of the claims may be made to positioning station 10, 10' and to the method according to the present invention.

In particular, value v5max of speed v5 could be different than value v4max.

Should value v5max be lower than value v4max, the speed of pack 14 would be reduced, as it comes into contact with conveyor 5 from conveyor 4.

Therefore, packs 14 could be stopped within stopping distance s with an even lower deceleration than deceleration a1.

In addition, value v5min of speed v5 could be greater than zero.

Accordingly, distance s would no longer be a stopping distance, but a decelerating distance that pack 14 runs on conveyor 5 before than its speed reaches value v5min, greater than zero, while conveyor 5 decelerates.

Furthermore, thrust element 13 could be configured so as to thrust packs 14, 15 on conveyor 5 towards manipulation station 9, with a movement parallel to direction X or not parallel to direction Y, anyway.

Furthermore, the transfer of packs 14, 15 from conveyor 5 on pallet 17 could be performed by means of known manipulating means other than robot arm 7.

For instance, prehensile tool 20 could be connected to a robot frame composed by two columns.

Furthermore, positioning station 10 could comprise more than two conveying units 11, conveyors 4 and conveyors 5.

Finally, conveying unit 11 could not comprise conveyor 3.

In this case, maximum value v2max of speed v2 would be equal to output speed v0.

## Claims

1. A positioning station (10, 10') for positioning a plurality of packs (14, 15) according to a desired configuration, comprising:
- at least one conveying unit (11), which is controllable to output, in use, at least one pack (14) of said plurality of packs (14, 15) at a given output first speed (v0);
- at least one first conveyor (5), which is drivable at a variable second speed (v5) and is arranged downstream of said at least one conveying unit (11) according to an advancing direction (X) of said packs (14, 15) through said conveying unit (11); and
- a thrust element (13), which is adapted to thrust said at least one pack (14), arranged on said at least one first conveyor (5), so as to render available said at least one pack (14) in said desired configuration outside said positioning station (10, 10');
**characterized by** comprising at least one second conveyor (4), which is controllable to decelerate said at least one pack (14) from said output first speed (v0) to a third speed (v4); said at least one second conveyor (4) being interposed between said at least one conveying unit (11) and said at least one first conveyor (5) along said advancing direction (X).

2. The positioning station of claim 1, **characterized in that** said at least one first conveyor (5) is accelerated, in use, from a minimum value (v5min) of said second variable speed (v5) to a maximum value (v5max) of said second variable speed (v5) when, in use, said at least one pack (14) is on said at least one second conveyor (4); said maximum value (v5max) of said second variable speed (v5) being equal to a maximum value (v4max) of said third speed (v4).

3. The positioning station of claims 1 or 2, **characterized in that** said at least one conveying unit (11) comprises in turn:
- a third conveyor (1), which is drivable at a maximum value (v1max) of a fourth speed (v1); said fourth speed (v1) being lower than said output first speed (v0); and
- a fourth conveyor (2), which is drivable at a maximum value (v2max) of a fifth speed (v2); said maximum value (v2max) of said fifth speed (v2) being greater than said maximum value (v1max) of said fourth speed (v1);
said third and said fourth conveyor (1, 2) being positioned one after the other and upstream of said at least one second conveyor (4), in respect of said advancing direction (X).

4. The positioning station of claim 3, **characterized in that** said fifth speed (v2) is equal to said output first speed (v0).

5. The positioning station of claims 1 to 3, **characterized in that** said at least one conveying unit (11) further comprises a fifth conveyor (3), which is drivable at a sixth speed (v3); said fifth conveyor (3) being adapted to rotate, in use, said at least one pack (14) about an axis (Z), which is transversal to said advancing direction (X);
a maximum value (v3max) of said sixth speed (v3) being greater than said maximum value (v2max) of said fifth speed (v2) ;
said third, fourth and fifth conveyors (1, 2, 3) being positioned one after another and upstream of said at least one second conveyor (4), in respect of said advancing direction (X);
said sixth speed (v3) being equal to said output first speed (v0).

6. The positioning station of any one of the foregoing claims, **characterized by** comprising:
- a plurality of said conveying units (11), arranged alongside each other in a further direction (Y), which is perpendicular to said advancing direction (X); said conveying units (11) being drivable independently of each other;
- a plurality of said first conveyors (5), arranged alongside each other in said further direction (Y); said first conveyors (5) being drivable independently of each other; and
- a plurality of said second conveyors (4), arranged alongside each other in said further direction (Y); said plurality of second conveyors (4) being drivable independently of each other; each second conveyor (4) being interposed between a respective conveying unit (11) and a respective first conveyor (5) along said advancing direction (X); each second conveyor (4) being fed, in use, by a respective conveying unit (11) with said at least one pack (14) at said output first speed (v0) and feeding, in use, a respective first conveyor (5) with said at least one pack (14) at said third speed (v4).

7. The positioning station of claims 5 or 6, **characterized in that**:
- the ratio of said maximum value (v2max) of said fifth speed (v2) to said maximum value (v1max) of said fourth speed (v1) is approximately equal to 2.5;
- the ratio of said maximum value (v3max) of said sixth speed (v3) to said maximum value (v2max) of said fifth speed (v2) is approximately equal to 1.2; and
- the ratio of said maximum value (v3max) of said sixth speed (v3) to said maximum value (v4max) of said third speed (v4) is approximately equal to 0.5.

8. A palletizing line (8, 8'), adapted to form a plurality of stacked layers (16), formed each with a plurality of said packs (14, 15), **characterized by** comprising:
- the positioning station (10, 10') of any one of the foregoing claims, adapted to position said plurality of packs (14, 15) according to said desired configuration; and
- a manipulation station (9), adapted to form layers (16) of said plurality of packs (14, 15) sorted, in use, by said positioning station (10, 10') and to stack said layers (16) of said plurality of packs (14, 15) on said pallet (17), to form a loading unit (22).

9. A method for positioning a plurality of packs (14, 15) according to a desired configuration on a positioning station (10, 10'); comprising the steps of:
i) driving at least one conveying unit (11), so as to output at least one pack (14) of said plurality of packs (14, 15) at a given output first speed (v0);
ii) driving at least one first conveyor (5) at a variable second speed (v5); said at least one first conveyor (5) being arranged downstream of said at least one conveying unit (11) according to an advancing direction (X) of said packs (14, 15) through said conveying unit (11); said variable second speed (v5) ranging between a minimum value (v5min) and a maximum value (v5max); said minimum value (v5min) being lower than said maximum value (v5max);
iii) thrusting said at least one pack (14) on said at least one first conveyor (5) by means of a thrust element (13), so as to render available said at least one pack (14) in said desired configuration outside said positioning station (10, 10');
said method **characterized by** comprising the steps of:
iv) outputting said at least one pack (14) at said output first speed (v0) from said at least one conveying unit (11) to at least one second conveyor (4) of said positioning station (10, 10'), which runs at a third speed (v4), so as to slow down said at least one pack (14) from said output first speed (v0) to said third speed (v4); said second conveyor (4) being interposed between said conveying unit (11) and said first conveyor (5) along said advancing direction (X);
v) moving said at least one pack (14) at said third speed (v4) on said at least one second conveyor (4) towards said at least one first conveyor (5) along said advancing direction (X); and
vi) outputting said at least one pack (14) from said at least one second conveyor (4) to said at least one first conveyor (5).

10. The method of claim 9, **characterized in that** said ii) step comprises the further step of vii) accelerating said at least one first conveyor (5) from said minimum value (v5min) of said second variable speed (v5) to said maximum value (v5max) of said second variable speed (v5); said maximum value (v5max) being equal to a maximum value (v4max) of said third speed (v4); said vii) step to be performed after or during said v) step.

11. The method of claim 10, **characterized by** comprising the further steps of:
viii) advancing said at least one pack (14) at said maximum value (v5max) of said second variable speed (v5) on said at least one first conveyor (5) along said advancing direction (X); said step viii) being performed after said steps vi) and/or vii); and/or
ix) decelerating said at least one pack (14) from said maximum value (v5max) of said second variable speed (v5) to said minimum value (v5min) of said second variable speed (v5) on said at least one first conveyor (5) along said advancing direction (X); said step ix) being performed after said step vii) and/or viii).

12. The method of any one of claims 9 to 11, **characterized by** comprising the further subsequent steps of:
x) advancing said at least one pack (14) on a third conveyor (1) of said at least one conveying unit (11) at a maximum value (v1max) of a fourth speed (v1); said maximum value (v1max) of said fourth speed (v1) being lower than said output first speed (v0); and
xi) outputting said at least one pack (14) from said third conveyor (1) to a fourth conveyor (2) of said at least one conveying unit (11), which runs at a maximum value (v2max) of a fifth speed (v2), so as to space out said at least one pack (14) from the packs (15) of said plurality of packs (14, 15) other than said at least one pack (14); said maximum value (v2max) of said fifth speed (v2) being lower than said output first speed (v0) and greater than said maximum value (v1max) of said third speed (v1); and
xii) outputting said at least one pack (14) from said fourth conveyor (2) to a fifth conveyor (3) of said at least one conveying unit (11), which runs at a maximum value (v3max) of a sixth speed (v3), so as to rotate said at least one pack (14) about an axis (Z), which is transversal to said advancing direction (X); said maximum value (v3max) of said sixth speed (v3) being equal to said output first speed (v0) ;
said further steps x), xi), xii) being performed before than said steps i) to ix).

13. The method of claim 12, **characterized by** comprising the further step of xiii) repeating said steps i) to xii) for each said pack (15) of said plurality of packs (14, 15) other than said at least one pack (14), so as to position said plurality of packs (14, 15) on said at least one first conveyor (5) according to said desired configuration.

14. The method of claim 12, **characterized by** comprising the further steps of:
xiv) moving a stopper (21') of said positioning station (10) from a retracted position, in which it allows the advancement of said packs 14, 15 from said second conveyor (4) to said first conveyor (5), to a blocking position, in which it blocks the advancement of said packs 14, 15 from said second conveyor (4) to said first conveyor (5); said stopper (21') being in said blocking position while said step iii) is performed; and
xv) driving constantly said second, third, fourth, fifth conveyors (4, 1, 2, 3) at maximum values (v4max, v1max, v2max, v3max) of respective speeds v4, v1, v2, v3, while said step xiv) is performed.
